# EUROPEAN PATENT SPECIFICATION

(11) **EP 0 730 108 B1**
(45) Date of publication and mention of the grant of the patent: **16.05.2001**
(21) Application number: 96102921.2
(22) Date of filing: 27.02.1996
(51) Int. Cl.: F16H 9/18, F16H 55/56

(54) **V-belt transmission**
V-Riemengetriebe
Transmission à courroie en V

(30) Priority: 28.02.1995 JP 4015495
(43) Date of publication of application: 04.09.1996
(73) Proprietor: HONDA GIKEN KOGYO KABUSHIKI KAISHA, Minato-ku Tokyo (JP)
(72) Inventor: Hanawa, Kaoru, c/o K.K. Honda Gijutsu Kenkyusho, Wako-shi, Saitama (JP)
(74) Representative: Liska, Horst, Dr.-Ing.

(56) References cited:
- FR-A- 2 153 946
- PATENT ABSTRACTS OF JAPAN vol. 010, no. 126 (M-477), 10 May 1986 & JP 60 252858 A (YAMAHA HATSUDOKI), 13 December 1985,
- PATENT ABSTRACTS OF JAPAN vol. 015, no. 146 (M-1102), 12 April 1991 & JP 03 024348 A (YAMAHA MOTOR), 1 February 1991,
- PATENT ABSTRACTS OF JAPAN vol. 017, no. 645 (M-1517), 30 November 1993 & JP 05 203005 A (YAMAHA MOTOR), 10 August 1993,
- PATENT ABSTRACTS OF JAPAN vol. 013, no. 225 (M-830), 25 May 1989 & JP 01 040760 A (HONDA MOTOR), 13 February 1989,
- PATENT ABSTRACTS OF JAPAN vol. 008, no. 166 (M-314), 2 August 1984 & JP 59 062770 A (YAMAHA HATSUDOKI), 10 April 1984,
- PATENT ABSTRACTS OF JAPAN vol. 018, no. 469 (M-1666), 31 August 1994 & JP 06 147301 A (SUZUKI MOTOR), 27 May 1994,
- PATENT ABSTRACTS OF JAPAN vol. 014, no. 481 (M-1037), 19 October 1990 & JP 02 195064 A (HONDA MOTOR), 1 August 1990,

## Description

The present invention relates to a driving pulley for a V-belt transmission.

Japanese Utility Model Laid-open No. 6-1902 discloses a V-belt transmission including a driving pulley mounted on a driving shaft, a driven pulley mounted on an output shaft, and a V-belt wrapped between the driving pulley and the driven pulley, the driving pulley including a fixed face fixed to the driving shaft, a movable face movable on the driving shaft in an axial direction thereof, a ramp plate fixed to the driving shaft and spaced from a back surface of the movable face, and a centrifugal weight movable in a radial direction of the movable face within a space defined between the ramp plate and the back surface of the movable face.

In such a V-belt transmission, there is a case of changing speed change characteristics, for example, restricting a top ratio, to cope with speed limit or the like. In such a case, it may be considered to make a change in the ramp plate; however, high precision is required to the shape of a guide surface of the ramp plate for guiding the centrifugal weight, so that the change in the ramp plate causes an increase in cost.

To solve the above problem, there can be provided a V-belt transmission including a driving pulley mounted on a driving shaft, a driven pulley mounted on an output shaft, and a V-belt wrapped between the driving pulley and the driven pulley, the driving pulley including a fixed face fixed to the driving shaft, a movable face movable on the driving shaft in an axial direction thereof, a ramp plate fixed to the driving shaft and spaced from a back surface of the movable face, and a centrifugal weight movable in a radial direction of the movable face within a space defined between the ramp plate and the back surface of the movable face; wherein the movable face is provided with an extending portion substantially parallel to the driving shaft, the extending portion having an extension end disposed opposite to the centrifugal weight with respect to the ramp plate, wherein a plurality of axially extending riblike guide portions are provided on an inner surface of the extending portion which guide portions engage with slide pieces provided at an outer circumference of said ramp plate, and wherein a stopper plate is mounted on the extension end of the extending portion, the stopper plate coming into abutment against the ramp plate when the movable face is moved a given distance toward the fixed face.

Such a driving pulley is known from JP-A-59062770. In the known driving pulley, the shape of the ramp plate is adapted to avoid interference between the slide pieces and the stopper plate in a top ratio position of the movable face. For a given installation space, the range of displacement is restricted between the movable face and the stopper plate

It is an object of the present invention to further improve the existing driving pulleys.

This object is achivied by a driving pulley according to claim 1. The dependent claims are directed to advantageous embodiments of the invention.

In the driving pulley according to the present invention, the stopper plate is mounted on the extending portion of the movable face, and the movement of the movable face is restricted by the abutment of the stopper plate against the ramp plate, thus restricting the top ratio.

Accordingly, the top ratio can be restricted with almost no changes in the components of the conventional driving pulley. Furthermore, the top ratio can be set in a wide range. Thus, a V-belt transmission having a high versatility can be obtained at low costs.

Further, an interference of the slide piece with the stopper plate is avoided due to the recesses in the stopper plate.

When the movable face is moved to come close to the fixed face, the stopper plate comes into abutment against the ramp plate at a given top ratio, thereby stopping further movement of the movable face toward the fixed face. Thus, the top ratio is restricted. In many cases, the restriction of the top ratio can be realized only by mounting the stopper plate without any changes in the other components of the driving pulley. Furthermore, the top ratio can be set in a wide range by changing the shape of the stopper plate. Accordingly, a transmission having a high versatility can be obtained at low costs.

A preferred embodiment of the present invention will now be described with reference to the drawings.

FIG. 1 is a sectional view showing a driving pulley in a preferred embodiment of the present invention.

FIG. 2 is a horizontal sectional view of a power unit to which the preferred embodiment is applied.

FIG. 3 is a plan view of a stopper plate in the preferred embodiment.

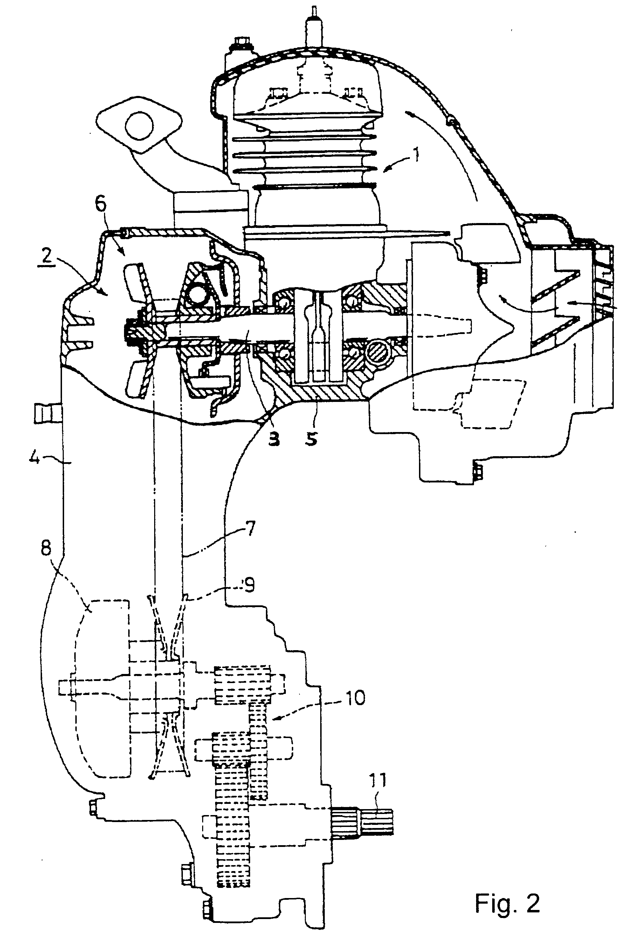

FIG. 2 is a horizontal sectional view of a power unit for a scooter according to the preferred embodiment. The power unit is provided with a two-cycle engine 1 and a V-belt transmission 2.

The V-belt transmission 2 is stored in a transmission case 4 formed on one side surface of a crankcase 5 so as to be elongated in a longitudinal direction of the vehicle. The V-belt transmission 2 is provided with a driving pulley 6 mounted on one end of a crankshaft 3 traversing the crankcase 5, a driven pulley 9 connected to the driving pulley 6 through a V-belt 7 and an automatic centrifugal clutch 8, and a final reduction gear 10 connected to the driven pulley 9. An output from the final reduction gear 10 is transmitted to a rear wheel driving shaft 11, thus driving a rear wheel not shown.

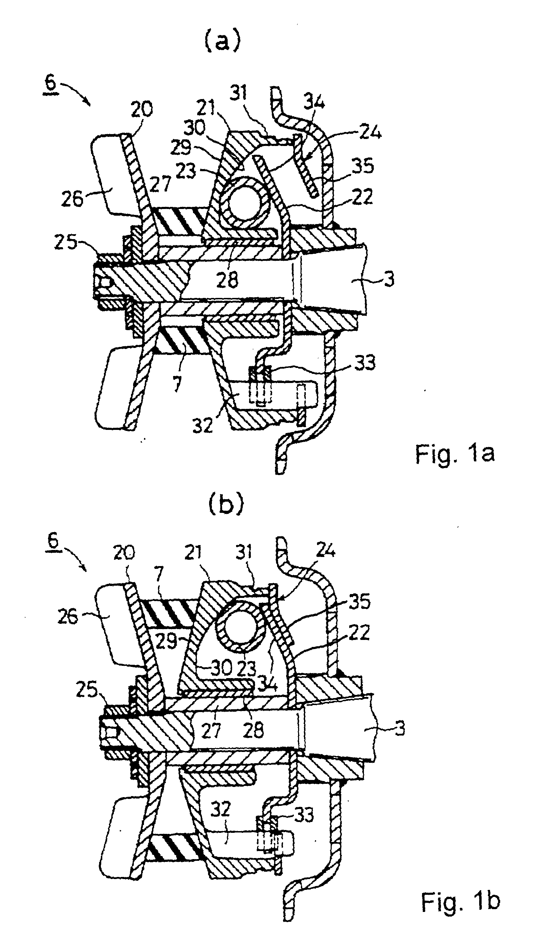

FIGS. 1a and 1b are enlarged sectional views showing the details of the driving pulley 6, in which FIG. la shows a low-speed condition and FIG. 1b shows a top-speed condition. As apparent from FIGS. 1a and 1b, the driving pulley 6 is provided with a fixed face 20 fixed to one end of the crankshaft 3, a movable face 21 movable axially of the crankshaft 3, a ramp plate 22 fixed to the crankshaft 3 at its inside position (on the two-cycle engine 1 side), a plurality of weight rollers 23 provided between the movable face 21 and the ramp plate 22 and movable radially of the movable face 21, and a stopper plate 24 mounted on the movable face 21.

The fixed face 20 is fixed to the end of the crankshaft 3 by a nut 25. The movable face 21 has a substantially cup-shaped cross section and is axially movable through a sleeve 27 and a bearing 28 provided around the crankshaft 3.

The movable face 21 has a belt contact surface 29, and the back side of the movable face 21 opposite to the bent contact surface 29 is recessed to form a plurality of guide slant surfaces 30 for guiding the weight rollers 23. The guide slant surfaces 30 extend radially of the movable face 21 and are arranged at equal intervals in the circumferential direction thereof (e.g., at 120° intervals).

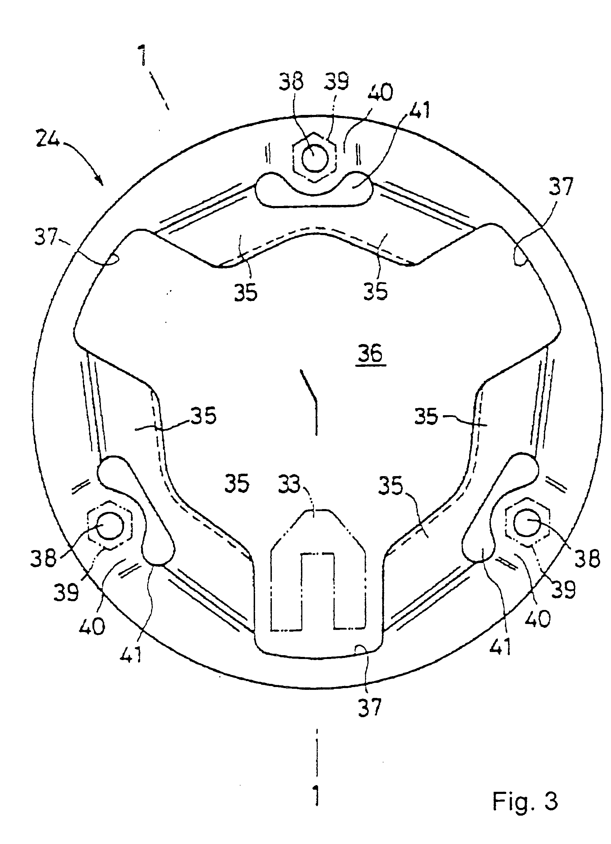

The outer circumference of the movable face 21 is formed with an annular wall 31 extending substantially in parallel to the crankshaft 3 so as to pass axially inward over the outer circumference of the ramp plate 22. The stopper plate 24 is mounted by bolts (see FIG. 3) on the axially inward end of the annular wall 31 at its portions disposed inward of the outer circumference of the ramp plate 22.

A plurality of axially extending, riblike guide portions 32 are formed on the inner surface of the annular wall 31 so as to be arranged at equal intervals in the circumferential direction of the movable face 21 (e.g., at 120° intervals). A plurality of slide pieces 33 are provided at the outer circumference of the ramp plate 22 so as to be arranged at equal intervals in the circumferential direction of the ramp plate 22. The guide portions 32 are respectively engaged with substantially U-shaped grooves formed in the slide pieces 33 (see FIG. 3), thereby inhibiting relative rotation of the guide portions 32 to the ramp plate 22.

A plurality of guide slant surfaces 34 are formed on the ramp plate 22 at its portions corresponding to the guide slant surfaces 30 of the movable face 21 so as to be inclined toward the guide slant surfaces 30. That is, the space between the guide slant surfaces 30 and the guide slant surfaces 34 is gradually reduced in the radially outward direction.

The outer circumferential portions of the stopper plate 24 fixed to the axially inward end of the annular wall 31 corresponding to the guide portions 32 of the annular wall 31 function as a stopper coming into abutment against the ramp plate 22 in restricting a top ratio.

The stopper plate 24 has a plurality of stopper slant surfaces 35 corresponding to the guide slant surfaces 34 of the ramp plate 22. The stopper slant surfaces 35 are inclined at substantially the same angle as that of inclination of the guide slant surfaces 34 so that both surfaces 34 and 35 overlap each other in restricting the top ratio.

FIG. 3 is a plan view of the stopper plate 24. In FIGS. 1a and 1b, the stopper plate 24 is shown in cross section taken along the line 1-1 in FIG. 3. As apparent from FIG. 3, the central portion of the stopper plate 24 is formed as a large opening 36 to avoid interference with the crankshaft 3 and its associated parts surrounding the same. The outer circumferential portion of the stopper plate 24 around the opening 36 is formed with a plurality of recesses 37 with a depth reaching the vicinity of the outer circumference of the stopper plate 24. The recesses 37 are positioned at equal intervals in the circumferential direction of the stopper plate 24 (e.g., at 120° intervals).

The recesses 37 are so formed as to allow the slide pieces 33 to pass therethrough with no interference during movement of the movable face 21 toward the fixed face 20. In FIG. 3, only one of the slide pieces 33 is shown by a phantom line for simplicity.

A plurality of bolt insert holes 38 are formed through the outer circumferential portion of the stopper plate 24 at positions intermediate of every adjacent recesses 37, and a plurality of bolts 39 are respectively inserted through the bolt insert holes 38 and secured to the inward end of the annular wall 31, thereby fixing the stopper plate 24 to the annular wall 31 of the movable face 21.

The surrounding portion around each bolt insert hole 38 is formed flat by pressing to serve as a mounting seat 40. A punched hole 41 is formed through a bent portion radially inside of each mounting seat 40, so as to facilitate the pressing work for each mounting seat 40. Each punched hole 41 has such a shape as not to so impair the rigidity of the stopper plate 24.

The operation of this preferred embodiment will now be described. When the rotational speed of the driving pulley 6 is increased from the low-speed condition shown in FIG. 1a, the weight rollers 23 are moved radially outward by a centrifugal force as being guided by the guide slant surfaces 30 and 34, thereby moving the movable face 21 toward the fixed face 20.

When the amount of movement of the movable face 21 reaches a given amount, the stopper slant surfaces 35 of the stopper plate 24 overlap the guide slant surfaces 34 of the ramp plate 22 as shown in FIG. 1b. At the same time, the outer circumferential portion of the stopper plate 24 comes into abutment against the outer circumferential portion of the ramp plate 22 where the slide pieces 33 are provided. Accordingly, further movement of the movable face 21 is stopped, resulting in restriction of the top ratio.

Thus, the use of the stopper plate 24 eliminates the need for any changes in the components of the conventional driving pulley, in particular, the movable face 21, the ramp plate 22, and the weight rollers 23. Further, the restricted condition of the top ratio can be freely changed by changing the shape of the stopper slant surfaces 35 of the stopper plate 24, thus making easy the change of speed change characteristics to obtain a greatly high versatility.

As apparent from FIG. 1b, the outer circumferential portion of the stopper plate 24 overlaps the slide pieces 33 in restricting the top ratio. Accordingly, there is a possibility that the slide pieces 33 and the stopper plate 24 may originally interfere with each other to result in a problem that the desired top ratio restriction cannot be realized.

However, the recesses 37 are formed in the stopper plate 24 so as to allow the pass of the slide pieces 33 ,thereby preventing the above possible interference between the slide pieces 33 and the stopper plate 24.

It is to be noted that the present invention is not limited to the above preferred embodiment, but various modifications may be made. For example, although the annular wall 31 is used as the extending portion in the above preferred embodiment, an extension member as the extending portion may be provided independently of the annular wall 31 so as to axially extend through the ramp plate 22, and the stopper plate 24 may be mounted on the extension member.

To facilitate restriction of a top ratio, a stopper plate 24 is mounted on the open end of an annular wall 31 provided at the outer circumference of a movable face 21. When the movable face 21 is moved toward a fixed face 20, stopper slant surfaces 25 of the stopper plate 24 overlap guide slant surfaces 34 of a ramp plate 22 to thereby stop further movement of the movable face 21, thus restricting the top ratio.

## Claims

1. Driving pulley for a V-belt transmission, comprising
a fixed face (20) to be fixed to a driving shaft (3) of the V-belt transmission, a movable face (21) movable on said driving shaft (3) in an axial direction thereof, a ramp plate (22) fixed to said driving shaft (3) and spaced from a back surface (30) of said movable face (21), and a centrifugal weight (23) movable in a radial direction of said movable face (21) within a space defined between said ramp plate (22) and the back surface (30) of said movable face (21), wherein said movable face (21) is provided with an extending portion (31) substantially parallel to said driving shaft (3), said extending portion (31) having an extension end disposed opposite to said centrifugal weight (23) with respect to said ramp plate (22), wherein a plurality of axially extending riblike guide portions (32) are provided on an inner surface of said extending portion (31) which guide portions (32) engage with slide pieces (33) provided at an outer circumference of said ramp plate (22), and wherein a stopper plate (24) is mounted on said extension end of said extending portion (31), said stopper plate (24) coming into abutment against said ramp plate (22) when said movable face (21) is moved a given distance toward said fixed face (20), characterized in that
an outer circumferential portion of said stopper plate (24) around an opening (36) therein is formed with a plurality of recesses (37) allowing said slide pieces (33) to pass therethrough with no interference during movement of said movable face (21) toward said fixed face (20) and preventing interference between the slide pieces (33) and the stopper plate (24) in a top ratio position of the movable face (21).

2. Driving pulley according to claim 1, wherein said outer circumferential portion of said stopper plate (24) is formed with a plurality of bolt insert holes (38) at positions intermediate of every adjacent recesses (37), and wherein a surrounding portion around each bolt insert hole (38) is formed flat to serve as a mounting seat (40).

3. Driving pulley according to claim 2, wherein said surrounding portion around each bolt insert hole (38) is formed flat by pressing.

4. Driving pulley according to claim 2 or 3, wherein a punched hole (41) is formed through a bent portion radially inside of each mounting seat (40).

## Patentansprüche

1. Antriebsscheibe für ein Keilriemengetriebe, die umfaßt:
eine feste Fläche (20), die an einer Antriebswelle (3) des Keilriemengetriebes befestigt ist, eine bewegliche Fläche (21), die auf der Antriebswelle (3) in deren Axialrichtung beweglich ist, eine Rampenplatte (22), die an der Antriebswelle (3) befestigt ist und von einer Rückseitenfläche (30) der beweglichen Fläche (21) beabstandet ist, und ein Zentrifugalgewicht (23), das in Radialrichtung der beweglichen Fläche (21) innerhalb eines Raumes, der zwischen der Rampenplatte (22) und der Rückseitenfläche (30) der beweglichen Fläche (21) definiert ist, beweglich ist, wobei die bewegliche Fläche (21) mit einem Verlängerungsabschnitt (31) versehen ist, der im wesentlichen parallel zur Antriebswelle (3) verläuft, wobei der Verlängerungsabschnitt (31) ein Verlängerungsende besitzt, das dem Zentrifugalgewicht (23) bezüglich der Rampenplatte (22) gegenüberliegend angeordnet ist, wobei mehrere axial verlaufende rippenähnliche Führungsabschnitte (32) an einer inneren Oberfläche des Verlängerungsabschnitts (31) vorgesehen sind, wobei die Führungsabschnitte (32) mit den Gleitstücken (33) in Eingriff sind, die an einem äußeren Umfang der Rampenplatte (22) vorgesehen sind, und wobei eine Anschlagplatte (24) am Verlängerungsende des Verlängerungsabschnitts (31) montiert ist, wobei die Anschlagplatte (24) gegen die Rampenplatte (22) stößt, wenn die bewegliche Fläche (21) um eine gegebene Strecke in Richtung zur festen Fläche (20) bewegt wird,
dadurch gekennzeichnet, daß
ein äußerer Umfangsabschnitt der Anschlagplatte (24) um eine darin befindliche Öffnung (36) mit mehreren Aussparungen (37) versehen ist, die den Gleitstücken (33) ermöglichen, ohne Störung während der Bewegung der beweglichen Fläche (21) in Richtung zur festen Fläche (20) hindurchzugelangen, und die eine gegenseitige Störung zwischen den Gleitstücken (33) und der Anschlagplatte (24) in einer Position der beweglichen Fläche (21) mit der größten Übersetzung verhindern.

2. Antriebsscheibe nach Anspruch 1, bei der der äußere Umfangsabschnitt der Anschlagplatte (24) mit mehreren Schraubeinsatzlöchern (38) an Positionen zwischen jeweils benachbarten Aussparungen (37) versehen ist, und bei der ein jedes Schraubeinsatzloch (38) umgebender Abschnitt flach ausgebildet ist, um als ein Montagesitz (40) zu dienen.

3. Antriebsscheibe nach Anspruch 2, bei der der jedes Schraubeinsatzloch (38) umgebende Abschnitt mittels Pressen flach ausgebildet ist.

4. Antriebsscheibe nach Anspruch 2 oder 3, bei der ein gestanztes Loch (41) durch einen gebogenen Abschnitt radial innerhalb des Montagesitzes (40) ausgebildet ist.

## Revendications

1. Poulie d'entraînement pour une transmission à courroie en V, comprenant:
une face fixe (20) destinée à être fixée sur un arbre d'entraînement (3) de la transmission à courroie en V, une face mobile (21) apte à se déplacer sur ledit arbre d'entraînement (3) dans une direction axiale de ce dernier, un plateau oblique (22) fixé sur ledit arbre d'entraînement (3) est espacé d'une surface dorsale (30) de ladite face mobile (21) et une masse centrifuge (23) apte à se déplacer dans une direction radiale de ladite face mobile (21), à l'intérieur d'un espace défini entre ledit plateau oblique (22) et la surface dorsale (30) de ladite face mobile (21), ladite face mobile (21) étant dotée d'une partie en saillie (31) essentiellement parallèle audit arbre d'entraînement (3), ladite partie en saillie (31) présentant une extrémité de saillie disposée à l'opposition de ladite masse centrifuge (23) par rapport audit plateau oblique (22), dans laquelle une pluralité de parties de guidage (32) en forme de nervures s'étendant axialement, est prévue sur une surface intérieure de ladite partie en saillie (31), lesquelles parties de guidage (32) engagent des pièces coulissantes (33) prévues sur une circonférence extérieure dudit plateau oblique (22), et dans laquelle un plateau de butée (24) est monté sur ladite extrémité de saillie de ladite partie en saillie (31), ledit plateau de butée (24) venant buter contre ledit plateau oblique (22) lorsque ladite face mobile (21) est déplacée sur une distance donnée en direction de ladite face fixe (20),
caractérisée en ce que
une partie périphérique extérieure dudit plateau de butée (24) entourant une ouverture (36) qui y est pratiquée est configurée avec une pluralité de creux (37) qui permettent auxdites pièces coulissantes (33) de traverser sans interférence pendant le déplacement de ladite face mobile (21) en direction de ladite face fixe (20), ce qui permet d'éviter des interférences entre les pièces coulissantes (33) et le plateau de butée (24) dans une position de rapport supérieur de la face mobile (21).

2. Poulie d'entraînement selon la revendication 1, dans laquelle ladite partie périphérique extérieure dudit plateau de butée (24) est configurée avec une pluralité de trous (38) d'insertion de boulon en des positions intermédiaires entre chaque creux (37) adjacents et dans laquelle une partie entourant chaque trou (38) d'insertion de boulon est aplatie pour servir de siège de montage (40).

3. Poulie d'entraînement selon la revendication 2, dans laquelle ladite partie qui entoure chaque trou (38) d'insertion des boulons est aplatie par pressage.

4. Poulie d'entraînement selon la revendication 2 ou 3, dans laquelle un trou poinçonné (41) est formé à travers une partie pliée, radialement à l'intérieur de chaque siège de montage (40).
